# EUROPEAN PATENT SPECIFICATION

(11) **EP 1 269 892 B1**
(45) Date of publication and mention of the grant of the patent: **23.03.2005**
(21) Application number: 02013092.8
(22) Date of filing: 13.06.2002
(51) Int. Cl.: A47C 7/02, A47C 7/14, A47C 7/40

(54) **Body pressure disperse-type seat**
Körperdruckverteilender Sitz
Chaise de dispersion de pression du corps

(30) Priority: 22.06.2001 JP 2001189657
(43) Date of publication of application: 02.01.2003
(73) Proprietor: HONDA GIKEN KOGYO KABUSHIKI KAISHA, Minato-ku Tokyo (JP)
(72) Inventor: Tobisawa, Ichiro, c/o Honda R&D Co., Ltd., Wako-shi, Saitama (JP); Chinzai, Naoya, c/o Honda R&D Co., Ltd., Wako-shi, Saitama (JP)
(74) Representative: Prechtel, Jörg, Dipl.-Phys. Dr.

(56) References cited:
- NL-A- 7 114 541
- US-A- 3 790 150

## Description

### BACKGROUND OF THE INVENTION

### 1. Field of the Invention

The present invention relates to a body pressure disperse-type seat which is capable of easily obtaining cushioning corresponding to the distribution of the pressure of a human body.

### 2. Description of the Related Art

As a cushion member for a seat which is capable of obtaining cushioning corresponding to the distribution of the body pressure, for example, there is known a cushion member for a seat which is disclosed in JP-A-10-276868. In this cushion member for a seat, a fiber mat including a plurality of cylindrical-shaped cells extending in the thickness direction thereof is laid on the whole surface of the cushion member and a soft elastic member is applied so as to penetrate into the respective cylindrical-shaped cells of the fiber mat, thereby hardening the fiber mat; and, the application amount of the soft elastic member into the fiber mat is set according to the distribution of the body pressure in a seat.

However, in the above-cited cushion member for a seat, although there can be obtained cushioning which corresponds to the distribution of the body pressure, the application amount of the soft elastic member into the fiber mat must be changed according to the distribution of the body pressure in a seat, which takes time and labor when manufacturing the cushion member for a seat.

### SUMMARY OF THE INVENTION

Accordingly, it is an object of the invention to provide a body pressure disperse-type seat which not only can obtain cushioning corresponding to the distribution of the body pressure but also can be manufactured easily.

In attaining the above object, according a first aspect of the invention, there is provided a body pressure disperse-type seat, wherein the occupant side of at least one of a seat part and a seat back part is formed by a plurality of segments formed of resin, each of the segments includes a body pressure receive plate portion for receiving the pressure of a body and a support pillar portion for supporting the body pressure receive plate portion, and each of the support pillar portions has a spring characteristic settable according to the body pressure to be received by the body pressure receive plate portion.

As described above, since the occupant side of at least one of the seat and seat back parts is formed by a plurality of segments formed of resin, each of the segments includes a body pressure receive plate portion for receiving the pressure of a body and a support pillar portion which supports the body pressure receive plate portion and also the spring characteristic of which can be set according to the body pressure to be received by the body pressure receive plate portion, every segment can be set according to the distribution of the body pressure and use of the plurality of segments can provide proper cushioning corresponding to the distribution of the body pressure. As a result of this, the present body pressure disperse-type seat can yield according to the body pressure of the occupant, that is, the body type thereof, which can prevent the occupant from being tired even when the occupant is seated on the seat for a long time.

Also, because the present body pressure disperse-type seat provides a shape in which there are arranged the plurality of body pressure receive plate portions of the resin-made segments, the present seat can be used without a seat cover.

According to a second aspect of the invention, in a body pressure disperse-type seat as set forth in the first aspect of the invention, the plurality of segments are connected through their respective support pillar portions to a common base part, while the plurality of segments and base part are formed of the same resin as an integral body.

As described above, since the plurality of segments are connected through their respective support pillar portions to a common base part, while the plurality of segments and base part are formed of the same resin as an integral body, due to the integral molding of the same resin, the plurality of segments and base part can be manufactured at the same time.

Also, because the plurality of segments and base part are formed of the same resin as an integral body, they can be enhanced in recyclability.

### BRIEF DESCRIPTION OF THE DRAWINGS

Fig. 1 is a side section view of an embodiment of a body pressure disperse-type seat according to the invention;
Fig. 2 is a front view of the embodiment of a body pressure disperse-type seat according to the invention; and,
Fig. 3 is a partially enlarged perspective view of the embodiment of a body pressure disperse-type seat according to the invention.

### DETAILED DESCRIPTION OF THE PREFERRED EMBODIMENTS

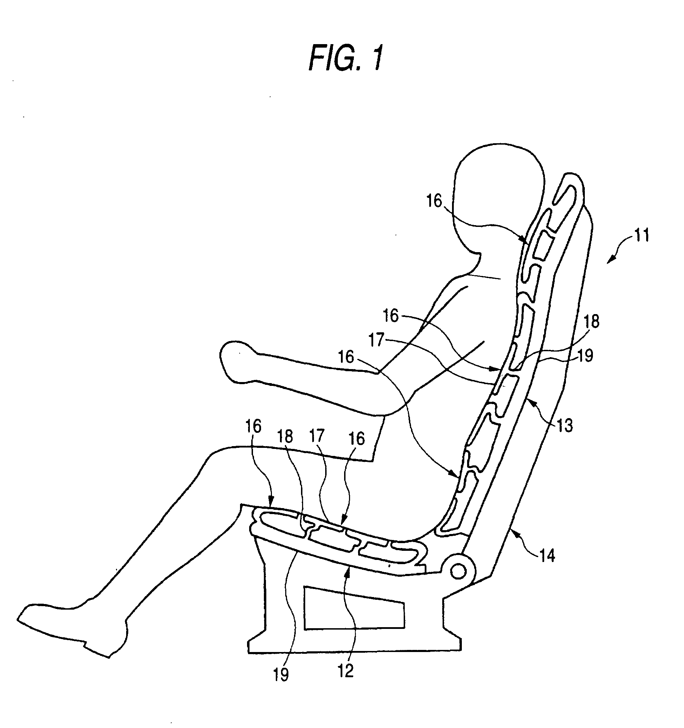

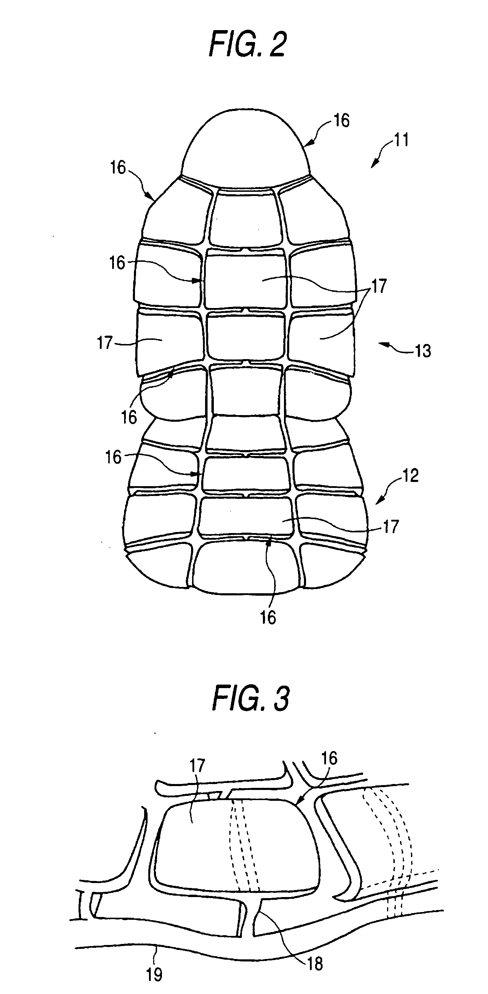

Now, description will be given below of a first embodiment of a body pressure disperse-type seat according to the invention with reference to Figs. 1 to 3.

A body pressure disperse-type seat 11 according to the present embodiment is a passenger seat for a vehicle which comprises a seat part 12 for supporting the buttocks of an occupant and the upper leg portions thereof from below and a seat back part 13 for supporting the back portion of the occupant and the back of the head thereof from behind, and a frame 14 for supporting the seat part 12 and seat back part 13.

And, in the body pressure disperse-type seat 11 according to the present embodiment, the occupant side of the seat part 12, that is, the upper surface side thereof and the occupant side of the seat back part 13, that is, the front surface side thereof are both formed of a plurality of resin-made segments 16; and, therefore, the body pressure disperse-type seat 11 is able to support the occupant while dispersing the body pressure of the occupant.

Here, the upper surface side of the seat part 12 and the front surface side of the seat back part 13 are divided into the plurality of segments 16 according to the distribution of the body pressure; and, for example, they are divided in such a manner that a division line between the mutually adjoining segments 16 forms a shape extending along the equal pressure line of the distribution of the body pressure.

Each of the segments 16 includes a substantially-flat-plate-shaped body pressure receive plate portion 17 for receiving the body pressure, and a bent-plate-shaped support pillar portion 18 having one end edge portion connected to the body pressure receive plate portion 17 for supporting the body pressure receive plate portion 17. By the way, the support pillar portion 18 has the same width as the body pressure receive plate portion 17 and the intermediate portion of the support pillar portion 18 is bent along a line substantially parallel to the body pressure receive plate portion 17; and, due to the flexibility and deflecting property thereof, the support pillar portion 18 can apply cushioning to the segment 16.

And, each of the plurality of segments 16 is connected to a common base part 19 in the other-end edge portion of the support pillar portion 18 on the opposite side to the body pressure receive plate portion 17; and, the plurality of segments 16 and base part 19 are formed of the same resin into an integral body.

Here, the segments 16 forming the seat part 12 are all connected to a common base part 19 in their respective other-end edge portions of the support pillar portions 18 on the opposite side to the body pressure receive plate portions 17; and, the plurality of segments 16 for the seat part 12 and base part 19 are formed of the same resin into an integral body.. Similarly, the segments 16 forming the seat back part 13 are all connected to a common base part 19 in their respective other-end edge portions of the support pillar portions 18 on the opposite side to the body pressure receive plate portions 17; and, the plurality of segments 16 for the seat back part 13 and base part 19 are formed of the same resin into an integral body. By the way, as the resin that is used to form the seat part 12 and seat back part 13, for example, there is used polypropylene which is excellent in deflecting property, flexibility and recyclability.

In the case of the support pillar portions 18, the spring characteristics thereof are set according to the body pressures that are received by the support pillar portions 18. That is, the spring characteristics thereof are set such that the greater the body pressures to be received are, the more flexible and easily deformable the support pillar portions 18 are. For example, the segments 16, which support the buttocks of an occupant having a large body pressure, are set most flexible and easily deformable. Here, the spring characteristics of the support pillar portions 18 may be set by changing the thickness thereof, or by changing the bent shape thereof, or by changing the number of support pillar portions 18 for supporting one body pressure receive plate portion 17, or combining them together selectively according to cases.

And, as shown in Fig. 1, the seat part 12 and seat back part 13 are mounted through their respective base parts 19 onto a frame 14 made of metal, which provides the body pressure disperse-type seat 11.

In the above-described body pressure disperse-type seat 11 according to the present embodiment, the respective occupant sides of the seat part 12 and seat back parts 13 are formed by a plurality of divided segments 16 formed of resin and each of the segments 16 is formed by a body pressure receive plate portion 17 for receiving the body pressure and a support pillar portion 18 which supports the body pressure receive plate portion 17 and also the spring characteristic of which is set according to the body pressure to be received by the body pressure receive plate portion 17. Thanks to this structure, by changing the thicknesses, shapes and number of the support pillar portions 18, the spring characteristics of the support pillar portions 18 can be set according to the distribution of the body pressure for every segments 16 and thus the plurality of segments 16 are able to provide proper cushioning corresponding to the distribution of the body pressure. As a result of this, the body pressure disperse-type seat 11 can yield properly according to the body pressure of the occupant, that is, the body type thereof, which can prevent the occupant from being tired even when the occupant is seated on the seat 11 for a long time. And, as described above, use of the plurality of segments 16 each having a simple structure can facilitate the manufacture of the body pressure disperse-type seat 11.

Also, since the body pressure disperse-type seat 11 provides a shape in which there are arranged a plurality of body pressure receive plate portions 17 of the resin-made segments 16, the seat 11 can be used without a seat cover. That is, no use of the seat cover can further facilitate the manufacture of the bodypressure disperse-type seat 11. However, as the need arises, there may be provided a seat cover made of cloth or leather in such a manner that it covers the seat part 12 and seat back part 13.

Further, in the case of the seat part 12, the plurality of segments 16 are connected through their respective support pillar portions 18 to the common base part 19, while the plurality of segments 16 and common base part 19 are integrally formed of the same resin to thereby provide the seat part 12. Accordingly, due to integral molding of the same resin, the plurality of segments 16 and common base part 19 of the seat part 12 can be manufactured at the same time. Similarly, in the case of the seat back part 13, the plurality of segments 16 are connected through their respective support pillar portions 18 to the common base part 19, while the plurality of segments 16 and common base part 19 are integrally formed of the same resin to thereby provide the seat back part 13. Thus, due to integral molding of the same resin, the plurality of segments 16 and common base part 19 of the seat back part 13 can be manufactured at the sametime. This makes it possible to manufacture the body pressure disperse-type seat 11 more easily.

In addition, since the plurality of segments 16 and common base part 19 are integrally formed of the same resin to thereby provide the seat part 12 as well as the plurality of segments 16 and common base part 19 are integrally formed of the same resin to thereby provide the seat back part 13, they can be enhanced in recyclability.

By the way, in the foregoing description, there is shown a structure in which the occupant side of the seat part 12 is formed by the plurality of divided segments 16 formed of resin as well as the occupant side of the seat back part 13 is formed by the plurality of divided segments 16 formed of resin. However, there can also be employed another structure in which the occupant side of at least one of the seat part 12 and seat back part 13 is formed by a plurality of divided segments 16 formed of resin. In this structure as well, there can also be obtained similar effects to the previously described structure.

While only certain embodiments of the invention have been specifically described herein, it will apparent that numerous modifications may be made thereto without departing from the spirit and scope of the invention.

As has been described heretofore in detail, in a body pressure disperse-type seat according to the first aspect of the invention, since the occupant side of at least one of a seat part and a seat back part is formed by a plurality of segments formed of resin, each of the segments includes a body pressure receive plate portion for receiving the pressure of a body and a support pillar portion which supports the body pressure receive plate portion and also the spring characteristic of which can be set according to the body pressure to be received by body pressure receive plate portion, every segments can be set according to the distribution of the body pressure and use of the plurality of segments can provide proper cushioning corresponding to the distribution of the body pressure. As a result of this, the present body pressure disperse-type seat can yield properly according to the body pressure of the occupant, that is, the body type thereof, which can prevent the occupant from being tired even when the occupant is seated on the seat for a long time. And, use of the plurality of segments each having such simple structure makes it possible to manufacture the body pressure disperse-type seat easily.

Also, because the present body pressure disperse-type seat provides a shape in which there are arranged the plurality of body pressure receive plate portions of the resin-made segments, the present seat can be used without a seat cover. Therefore, no use of the seat cover can further facilitate the manufacture of the seat.

In a body pressure disperse-type seat as set forth in the second aspect of the invention, since the plurality of segments are connected through their respective support pillar portions to the common base part, while the plurality of segments and base part are formed of the same resin as an integral body, due to the integral molding of the same resin, the plurality of segments and base part can be manufactured at the same time. Therefore, the manufacture of the body pressure disperse-type seat can be facilitated still further.

Also, because the plurality of segments and base part are formed of the same resin as an integral body, they can be enhanced in recyclability.

In the body pressure disperse-type seat, the occupant side of at least one of a seat part and a seat back part includes a plurality of segments formed of resin, each of the segments includes a body pressure receive plate portion for receiving the pressure of a body and a support pillar portion for supporting the body pressure receive plate portion, and each of the support pillar portions has a spring characteristic which can be set according to the body pressure to be received by the body pressure receive plate portion.

## Claims

1. A body pressure disperse-type seat, comprising:
a plurality of segments (16) formed of resin, which form an occupant side of at least one of a seat part and a seat back part,
wherein each of said segments includes a body pressure receive plate portion (17) for receiving a pressure of a body and a support pillar portion (18) for supporting said body pressure receive plate portion (17), and
**characterised in that** each of said support pillar portions (18) has a spring characteristic being set according to the body pressure to be received by the body pressure receive plate portion (17).

2. The body pressure disperse-type seat according to claim 1, further comprising:
a common base part connecting said plurality of segments through said respective support pillar portions,
wherein said plurality of segments and said base part are formed of the same resin as an integral body.

3. The body pressure disperse-type seat according to claim 1, wherein said support pillar portion has an intermediate portion bent parallel to said body pressure receive plate portion.

## Patentansprüche

1. Körperandruck verteilender Sitz, umfassend:
eine Mehrzahl aus einem Harz gebildeter Segmente (16), welche eine Benutzerseite von wenigstens einem Teil aus einem Sitzteil und einem Rückenlehnenteil bilden,
wobei jedes der Segmente einen Körperandruck-Aufnahme-Plattenabschnitt (17) zum Aufnehmen eines Drucks eines Körpers und einen Stützpfostenabschnitt (18) zum Abstützen des Körperandruck-Aufnahme-Plattenabschnitts (17) umfasst, und
**dadurch gekennzeichnet, dass** jeder der Stützpfostenabschnitte (18) eine Federcharakteristik aufweist, die gemäß dem durch den Körperandruck-Aufnahme-Plattenabschnitt (17) aufzunehmenden Körperandruck gesetzt ist.

2. Körperandruck verteilender Sitz nach Anspruch 1, ferner umfassend:
einen gemeinsamen Basisteil, der die Mehrzahl von Segmenten mittels der jeweiligen Stützpfostenabschnitte verbindet,
wobei die Mehrzahl von Segmenten und der Basisteil aus demselben Harz als ein integraler Körper gebildet sind.

3. Körperandruck verteilender Sitz nach Anspruch 1, wobei der Stützpfostenabschnitt einen zwischenliegenden Abschnitt aufweist, der parallel zu dem Körperandruck-Aufnahme-Plattenabschnitt gebogen ist.

## Revendications

1. Siège de type à répartition de la pression du corps, comportant :
une pluralité de segments (16) constitués de résine, qui forment un côté occupant d'au moins l'un parmi une partie formant siège et une partie formant dossier,
dans lequel chacun desdits segments inclut une partie formant plaque réceptrice de la pression du corps (17) pour recevoir une pression d'un corps et une partie formant pilier d'appui (18) pour supporter ladite partie formant plaque réceptrice de la pression du corps (17), et
**caractérisé en ce que** chacune desdites parties formant pilier d'appui (18) a une caractéristique élastique établie en fonction de la pression du corps qui doit être reçue par la partie formant plaque réceptrice de la pression du corps (17).

2. Siège de type à répartition de la pression du corps selon la revendication 1, comportant en outre :
une partie de base commune reliant ladite pluralité de segments par l'intermédiaire desdites parties formant pilier d'appui respectives,
dans lequel ladite pluralité de segments et ladite partie de base sont constituées de la même résine en formant un corps monobloc.

3. Siège de type à répartition de la pression du corps selon la revendication 1, dans lequel ladite partie formant pilier d'appui a une partie intermédiaire fléchie parallèlement à ladite partie formant plaque réceptrice de la pression du corps.
